# EUROPEAN PATENT APPLICATION

(11) **EP 4 464 665 A1**
(43) Date of publication of application: **20.11.2024**
(21) Application number: 22920793.1
(22) Date of filing: 28.11.2022
(51) Int. Cl.: C01D 1/28, C01D 1/42, C01D 1/30, C01D 7/24, C01B 39/02, C01B 25/30, C01G 53/00, H01M 10/54

(54) **METHOD FOR RECOVERY OF VALUABLE METALS AND ZEOLITE-CONTAINING MATERIAL FROM WASTE CATHODE MATERIAL REACTION VESSEL**

(30) Priority: 11.01.2022 KR 20220004207
(71) Applicant: KOREA INSTITUTE OF GEOSCIENCE AND MINERAL RESOURCES, Yuseong-gu Daejeon 34132 (KR)
(72) Inventor: RYU, Tae-Gong, Daejeon 34090 (KR); SHIN, Jun-Ho, Daejeon 35359 (KR); JEONG, Jae-Min, Daejeon 34120 (KR)
(74) Representative: Witte, Weller & Partner Patentanwälte mbB
(86) International application number: PCT/KR2022/018941
(87) International publication number: WO 2023/136464

(57) **Abstract**

The present disclosure relates to a method for recovery of valuable metals and a zeolite-containing material from a waste cathode material reaction vessel, in which valuable metals and a zeolite-containing material are recovered from a waste cathode material reaction vessel being discarded, and recycled as resources, thus reducing waste from the waste cathode material reaction vessel.

## Description

### [Technical Field]

The present disclosure relates to a method for recovery of valuable metals and a zeolite-containing material from a waste cathode material reaction vessel.

### [Background Art]

Recently, as demand for electric vehicles (EVs) and energy storage systems (ESSs) has rapidly increased, demand for lithium secondary batteries has also increased rapidly. In the case of high-capacity lithium secondary batteries for EV and ESS, NCM or NCA-based cathode materials are mainly used therefor, and cathode materials are generally manufactured through a sintering reaction between lithium hydroxide and a (NCM or NCA-based) precursor.

Lithium hydroxide (LiOH H₂O), a raw material for cathode materials, is used in excess when mixed with a precursor and sintered to improve the high-capacity performance of lithium secondary batteries. For this reason, a subsequent process of removing excess lithium components through a washing process after manufacturing the cathode material is required.

In addition, there is the problem that the reaction vessel (reaction crucible, box sagger) used in the production of the cathode material is corroded due to the erosion reaction of lithium hydroxide used in excess during the manufacturing process of the cathode material at high temperature, reducing the service life of the reaction vessel. Accordingly, since the lifespan of the reaction vessel used in the continuous cathode material manufacturing process is within about 30 days, the reaction vessel needs to be replaced periodically, and the waste reaction vessel generated at this time is being disposed of due to the absence of recycling technology.

As a recycling technology applied to the waste reaction vessel generated after manufacturing a cathode material to date, there have been reports of recycling waste reaction vessels in which a waste reaction vessel is pulverized through a crushing/separation process and then a part of the reaction vessel is mixed in the manufacture of another reaction vessel. However, the recycling rate of waste reactor vessels is still low.

Accordingly, the present inventors developed a method for recovering valuable metal resources and a zeolite-containing material from the waste cathode material reaction vessel being disposed of, and confirmed its efficiency, thereby completing the present disclosure.

### [Disclosure]

### [Technical Problem]

An objective of the present disclosure is to provide a method for recovery of valuable metals and a zeolite-containing material from a waste cathode material reaction vessel.

The objectives of the present disclosure are not limited to the objects described above and other objectives will be clearly understood by those skilled in the art from the following description.

### [Technical Solution]

In order to achieve the objectives, according to an aspect of the present disclosure, there is provided a method for recovery of valuable metals and a zeolite-containing material from a waste cathode material reaction vessel, comprising the steps of (a) recovering a nickel • cobalt • manganese (NCM) precursor from the cathode material powder remaining in a waste cathode material reaction vessel; (b) preparing lithium hydroxide from a washing solution (I) of the waste cathode material reaction vessel; (c) sulfating the residue remaining after separating the washing solution (I) in step (b) to prepare lithium carbonate from a washing solution (II); and (d) preparing a zeolite-containing material from the residue remaining after separating the washing solution (II) in step (c).

The step (a) may comprise (a-1) water washing the cathode material powder to separate the lithium-containing solution (I), and (a-2) acid leaching the residue remaining after the separation to separate the lithium-containing solution (II).

The step (a-1) may be repeatedly treating the lithium-containing solution (I) with membrane capacitive deionization (MCDI) to enrich the lithium concentration to 5,000 ppm or more.

The step (a-2) may be leaching the residue with an acid solution and then adjusting the pH to precipitate a nickel • cobalt • manganese (NCM) precursor.

The pH may be 9 or higher.

The step (b) may be (b-1) enriching the lithium concentration to 5,000 ppm or more by (i) water washing the washing solution (I) at a solid-liquid ratio of waste reaction vessel powder (g)/water (L) of 500 or more; or (ii) repeatedly water washing the washing solution (I).

The step (b-1) may be additionally water washing lithium ions remaining in the powder of the waste cathode material reaction vessel without being recovered during the water washing process, and repeatedly treating the lithium ions with membrane capacitive deionization (MCDI) to enrich the lithium concentration.

The step (b-1) may further comprise (b-2) adding calcium oxide (CaO) or calcium hydroxide (Ca(OH)₂) to the concentrated lithium solution to precipitate and remove carbonate ions, cations, or both.

It may be adding the lithium-containing solution (I) to the concentrated lithium solution.

The step (c) may be converting the insoluble lithium component contained in the powder of the waste cathode material reaction vessel into a water-soluble lithium component through a sulfation reaction.

The sulfation reaction may be adding sulfate and roasting the mixture at 400 to 900 °C.

The sulfate may be selected from the group consisting of Na₂SO₄, (NH₄)₂SO₄, MgSO₄ and Al₂(SO₄)₃.

The diameter of a powder particle may be 800 µm or less.

The washing solution (II) obtained through water washing after the sulfate roasting may be repeatedly treated with membrane capacitive deionization (MCDI) to enrich the lithium concentration to 3000 ppm.

The sulfation reaction may be adding sulfuric acid, roasting the mixture at 200 to 300 °C, followed by water washing to prepare a lithium concentrate with a lithium concentration of 2,500 ppm or more.

A lithium phosphate may be prepared from the lithium concentrate, and a high-concentration lithium solution may be prepared from the lithium phosphate.

The lithium-containing solution (I), the lithium-containing solution (II) or the concentrated washing solution (I) may be added to the concentrated lithium solution.

The by-products generated in the process of preparing the high-concentration lithium solution from the lithium phosphate may be reacted with sulfuric acid to recover phosphoric acid, and the recovered phosphoric acid may be used to prepare lithium phosphate.

The high-concentration lithium solution may be purified to prepare lithium carbonate.

The step (d) may be acid leaching the remaining residue, followed by alkali treatment.

The acid leaching may be treating the residue with sulfuric acid or a mixture of sulfuric acid and hydrogen peroxide.

The treatment temperature may be 60 to 90 °C.

The alkali treatment may be treating the residue with 1 to 7 moles of sodium hydroxide.

### [Advantageous Effects]

According to the method for recovery of valuable metals and a zeolite-containing material from the waste cathode material reaction vessel of the present disclosure, a nickel • cobalt • manganese (NCM) precursor, valuable metals such as lithium hydroxide and lithium carbonate and a zeolite-containing material can be recovered from the waste cathode material reaction vessel being discarded to recycle resources and reduce waste from the waste cathode material reaction vessel.

The effects of the present disclosure are not limited thereto and it should be understood that the effects include all effects that can be inferred from the configuration of the present disclosure described in the following specification or claims.

### [Description of Drawings]

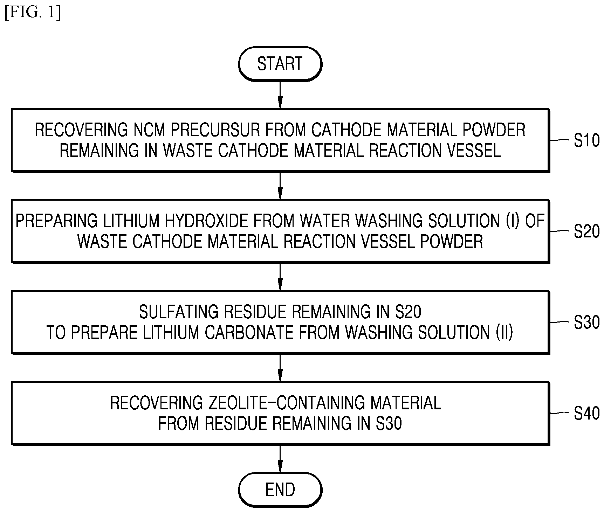

FIG. 1 is a process flow chart of a method for recovery of valuable metals and a zeolite-containing material from a waste cathode material reaction vessel of the present disclosure.

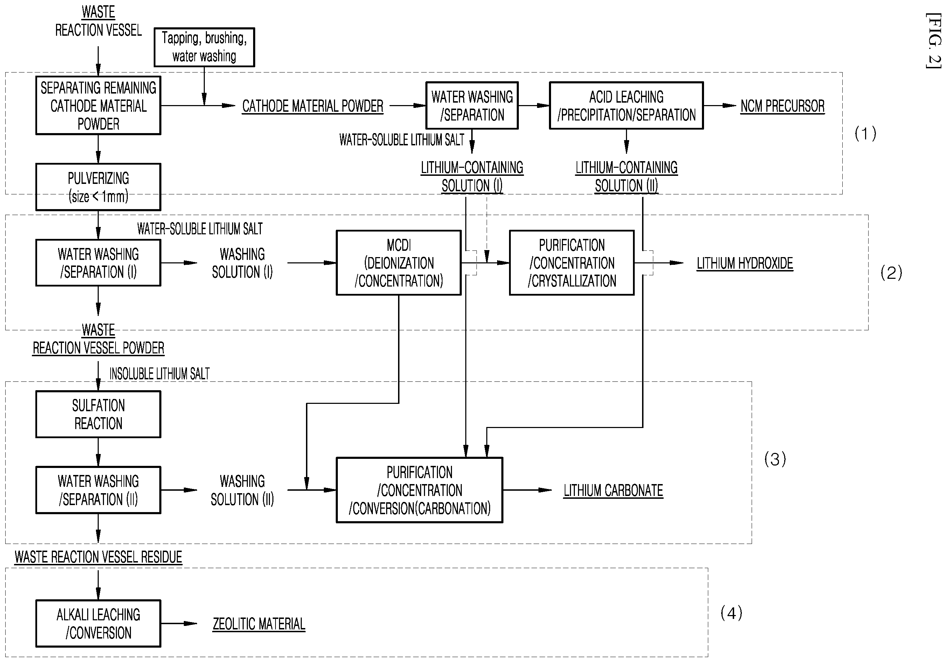

FIG. 2 is a process flow chart of a method for recovery of valuable metals and a zeolite-containing material from a waste cathode material reaction vessel according to an embodiment of the present disclosure.

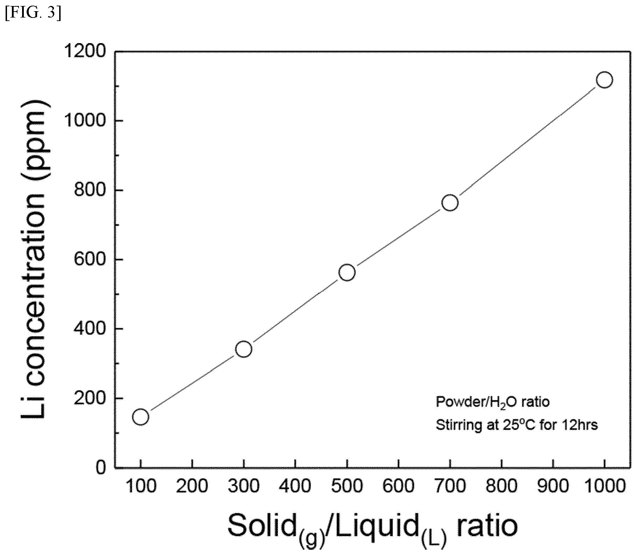

FIG. 3 is a graph showing the concentration of lithium ions depending on a solid/liquid ratio, in the process of recovering lithium ions through water washing of the cathode material powder at the step of recovering a nickel • cobalt • manganese (NCM) precursor from the cathode material powder remaining in the waste cathode material reaction vessel according to an embodiment of the present disclosure.

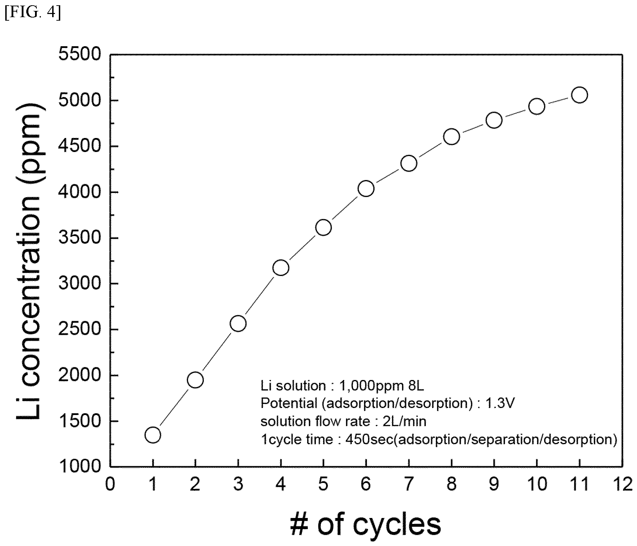

FIG. 4 is a graph showing the concentration of lithium ions depending on the number of repetitions of membrane capacitive deionization (MCDI), in the process of recovering lithium ions through water washing of the cathode material powder at the step of recovering a nickel • cobalt • manganese (NCM) precursor from the cathode material powder remaining in the waste cathode material reaction vessel according to an embodiment of the present disclosure.

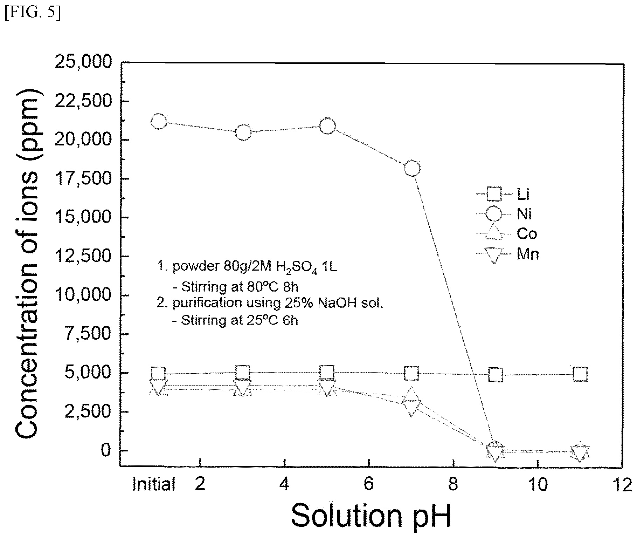

FIG. 5 is a graph showing the concentration of valuable metal ions in a solution depending on the pH of the solution, in the process of recovering lithium ions by acid leaching after water washing of the cathode material powder and adjusting the pH at the step of recovering a nickel • cobalt • manganese (NCM) precursor from the cathode material powder remaining in the waste cathode material reaction vessel according to an embodiment of the present disclosure.

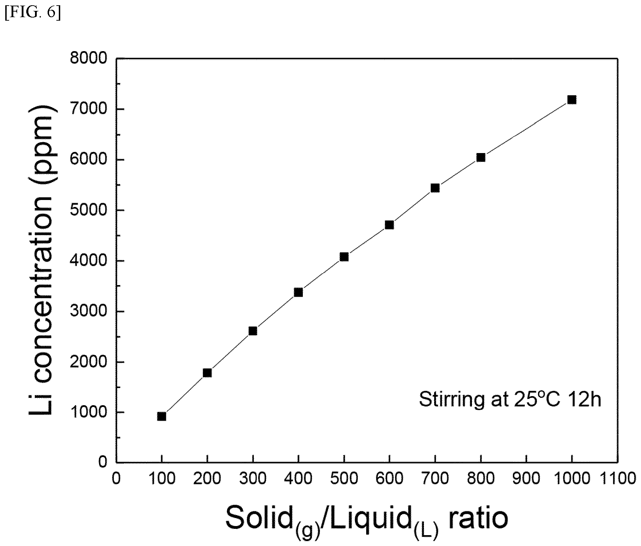

FIG. 6 is a graph showing the concentration of lithium ions depending on a solid/liquid ratio in the washing process, in the step of preparing lithium hydroxide from the washing solution (I) of the waste cathode material reaction vessel according to an embodiment of the present disclosure.

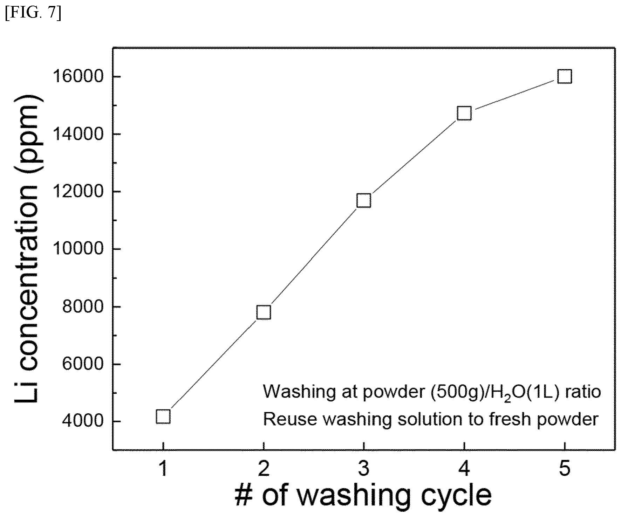

FIG. 7 is a graph showing the concentration of lithium ions depending on the number of repetitions of water leaching, in the step of preparing lithium hydroxide from the washing solution (I) of the waste cathode material reaction vessel according to an embodiment of the present disclosure.

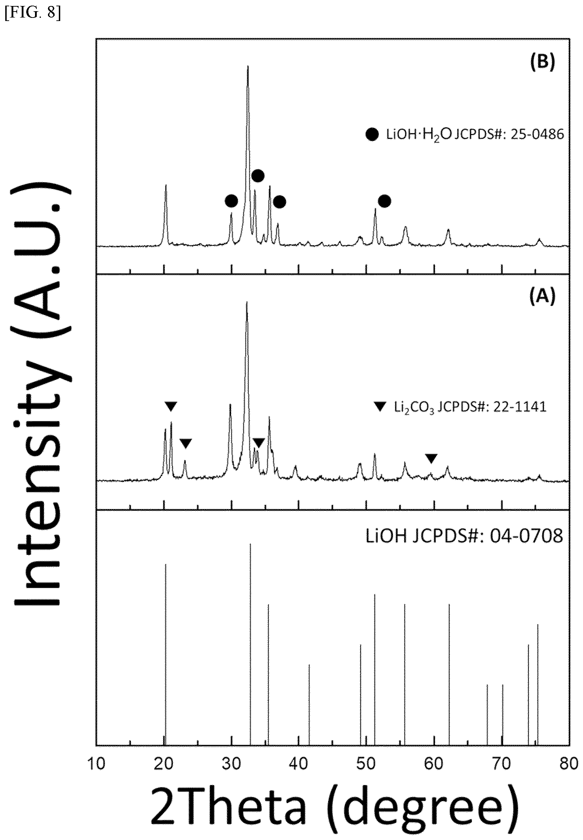

FIG. 8 is a graph showing the lithium compounds produced when lime is used and not used in the water leaching solution, in the step of preparing lithium hydroxide from the washing solution (I) of the waste cathode material reaction vessel according to an embodiment of the present disclosure.

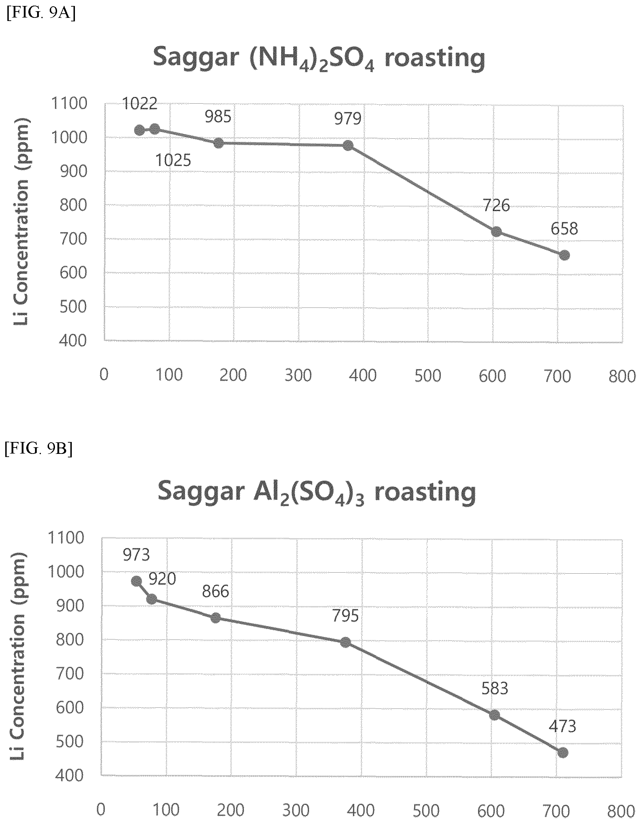

FIG. 9A is a graph showing the concentration of lithium ions depending on a particle size of powder when salt roasted with (NH₄)₂SO₄ during the sulfation reaction, and FIG. 9B is a graph showing the concentration of lithium ions depending on a particle size of powder when salt roasted with Al₂(SO₄)₃, in the process of sulfating the residue remaining after separating the washing solution (I) to prepare lithium carbonate from the washing solution (II) according to an embodiment of the present disclosure.

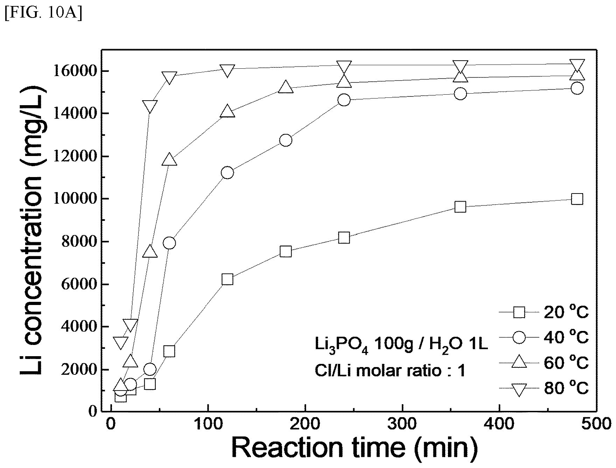

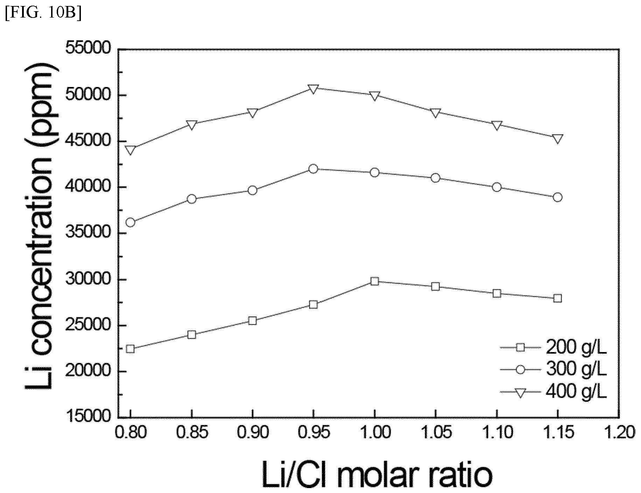

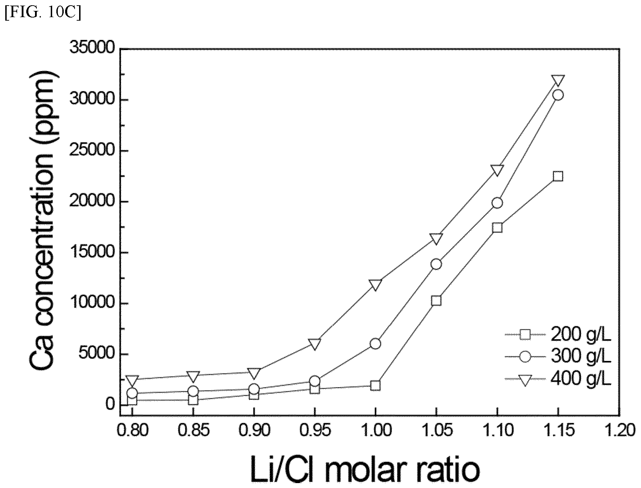

FIG. 10A is a graph showing the concentration of lithium ions contained in the prepared lithium solution depending on a reaction temperature in preparing a high-concentration lithium solution from lithium phosphate, in the step of sulfating the residue remaining after separating the washing solution (I) to prepare lithium carbonate from the washing solution (II) according to an embodiment of the present disclosure. FIG. 10B is a graph showing the concentration of lithium ions depending on a Cl/Li molar ratio in preparing a high-concentration lithium solution from lithium phosphate. FIG. 10C is a graph showing the concentration of calcium ions depending on a Cl/Li molar ratio in preparing a high-concentration lithium solution from lithium phosphate.

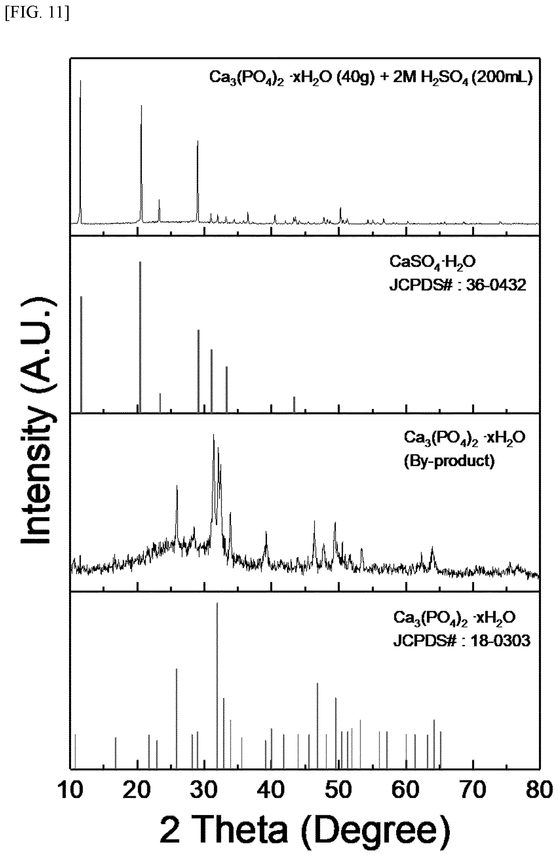

FIG. 11 is a graph showing the results of X-ray diffraction analysis (XRD) of the by-products (Ca₃(PO₄)₂·xH₂O) generated in the process of converting lithium phosphate into a high-concentration lithium solution, and the precipitate (calcium sulfate) separated in the process of recovering phosphoric acid by reacting the by-products with a sulfuric acid solution, in the step of sulfating the residue remaining after separating the washing solution (I) to prepare lithium carbonate from the washing solution (II) according to an embodiment of the present disclosure.

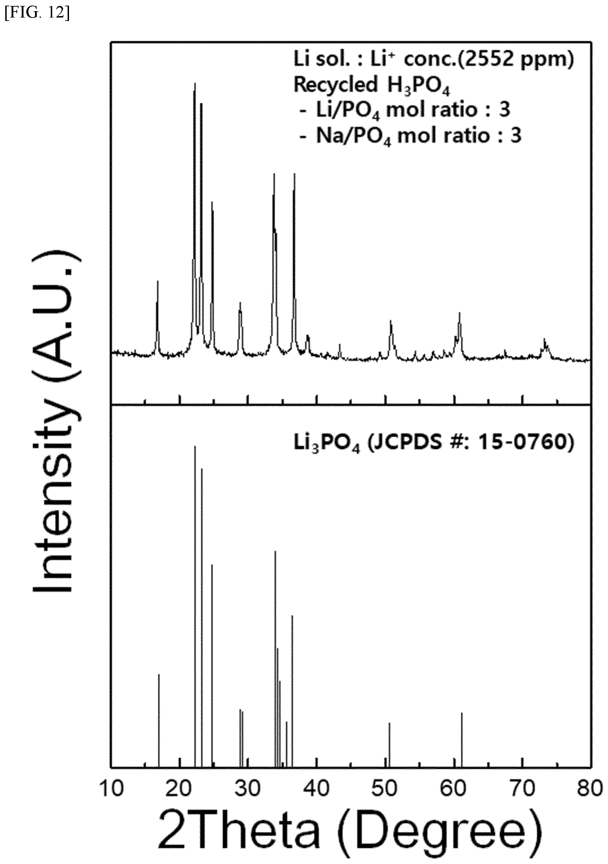

FIG. 12 is a graph showing the results of X-ray diffraction analysis (XRD) of the lithium phosphate recovered by reacting by-products (Ca₃(PO₄)₂·xH₂O) generated in the process of converting lithium phosphate into a high-concentration lithium solution, with a sulfuric acid solution to recovere phosphoric acid, followed by heating or concentration to convert the phosphoric acid into a high concentration phosphoric acid and react same with a lithium solution (washing solution (II)), in the step of sulfating the residue remaining after separating the washing solution (I) to prepare lithium carbonate from the washing solution (II) according to an embodiment of the present disclosure.

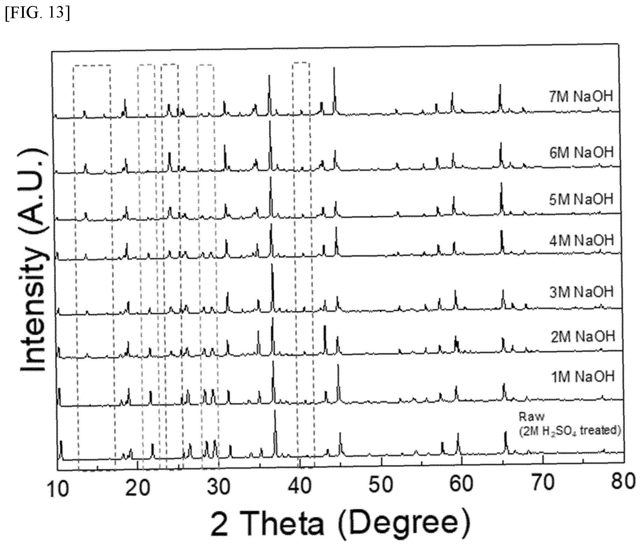

FIG. 13 is a graph showing the results of X-ray diffraction analysis (XRD) of the resulting product depending on a concentration of alkali for converting the residue after separation by acid leaching of the remaining materials (Co, Ni, Mn and Li) contained in the residue, in the step of preparing a zeolite-containing material from the residue remaining after separating the washing solution (II) according to an embodiment of the present disclosure.

### [Best Mode]

The present disclosure provides a method for recovery of valuable metals and a zeolite-containing material from a waste cathode material reaction vessel, comprising the steps of (a) recovering a nickel • cobalt • manganese (NCM) precursor from the cathode material powder remaining in a waste cathode material reaction vessel; (b) preparing lithium hydroxide from the washing solution (I) of the waste cathode material reaction vessel; (c) sulfating the residue remaining after separating the washing solution (I) in step (b) to prepare lithium carbonate from the washing solution (II); and (d) preparing a zeolite-containing material from the residue remaining after separating the washing solution (II) in step (c).

### [Mode for Invention]

Hereinafter, preferred embodiments of the present disclosure will be described with reference to accompanying drawings.

The advantages and features of the present disclosure, and methods of achieving them will be clear by referring to the exemplary embodiments that will be described hereafter in detail with reference to the accompanying drawings.

However, the present disclosure is not limited to the exemplary embodiments described hereafter and may be implemented in various ways, and the exemplary embodiments are provided to complete the description of the present disclosure and let those skilled in the art completely know the scope of the present disclosure and the present disclosure is defined by claims.

Further, when it is determined that well-known technologies, etc. may make the scope of the present disclosure unclear, they will not be described in detail in the following description.

Hereinafter, the present disclosure is described in detail.

The present disclosure provides a method for recovery of valuable metals and a zeolite-containing material from a waste cathode material reaction vessel.

FIG. 1 is a process flow chart of a method for recovery of valuable metals and a zeolite-containing material from a waste cathode material reaction vessel according to the present disclosure. Hereinafter, the process will be described in detail step by step with reference to FIG. 1.
(a) A nickel • cobalt • manganese (NCM) precursor is recovered from the cathode material powder remaining in a waste cathode material reaction vessel. S10

The waste cathode material reaction vessel may be a waste cathode material reaction crucible (box sagger) conventionally known in the art may be used, and preferably comprises Al₂O₃-SiO₂-MgO as a main component.

The cathode material powder remaining in the waste cathode material reaction vessel may be obtained from the cathode material powder or chips attached to the inner surface layer of the waste cathode material reaction vessel through air blasting, tapping, flushing or the like.

The step (a) of the present disclosure may comprise (a-1) water washing the cathode material powder to separate the lithium-containing solution (I), and (a-2) acid leaching the residue remaining after the separation to separate the lithium-containing solution (II). Since an excessive amount of lithium components used in manufacturing the cathode material remain in the cathode material powder separated from the waste reaction vessel, a solution containing lithium ions may be recovered by water washing the powder.

The step (a-1) may be repeatedly treating the lithium-containing solution (I) with membrane capacitive deionization (MCDI) to enrich the solution to have a lithium concentration of 5,000 ppm or more. The lithium solution separated after water washing has a low lithium concentration and, thus, needs to be treated in such a way as to produce an insoluble lithium compound required in the process of making a lithium compound (lithium carbonate) material and convert same into a high-concentration lithium solution. Accordingly, the lithium solution may be concentrated to 5,000 ppm or more through MCDI, in order to convert same into an insoluble lithium compound through a precipitation reaction. In terms of precipitation efficiency, the higher the concentration of lithium ions, the higher the rate and recovery rate.

The step (a-2) may be leaching the residue with an acid solution and then adjusting the pH to precipitate a nickel • cobalt • manganese (NCM) precursor. The cathode material powder separated after water washing may be leached in a sulfuric acid solution (at room temperature or by being heated) and titrated or precipitated to convert same into an NCM precursor. After separating the NCM precursor, the lithium-containing solution (II) may be recycled as a lithium carbonate preparation solution and used as a raw material.

The pH may be 9 or higher. Referring to Table 3 and FIG. 5, at pH 9 or higher, the concentration of lithium ions in the solution is high, and the concentrations of nickel ions, cobalt ions and manganese ions are very low or absent, which confirms that the precipitation rate of the NCM precursor is very high at pH 9 or higher.

(b) Lithium hydroxide is prepared from the washing solution (I) of a waste cathode material reaction vessel. S20

The step (b) of the present disclosure is the process of, after separating the cathode material powder remaining from the waste reaction vessel in S10, crushing or pulverizing the waste cathode material reaction vessel to prepare powder, and water washing same to separate a solution containing lithium ions.

The crushing or pulverization is performed by a method generally used in the technical field of the present disclosure, and the present disclosure is not particularly limited. The size of the powder after crushing or pulverization is preferably 1 mm or less. There is a disadvantage in that, when the powder size exceeds 1 mm, the leaching rate and reactivity in the following water leaching, acid leaching and sulfuration reactions decrease.

The step (b) of the present disclosure may be (b-1) enriching the lithium concentration to 5,000 ppm or more by (i) water washing the washing solution (I) at a solid-liquid ratio of waste reaction vessel powder (g)/water (L) of 500 or more; or (ii) repeatedly water washing the washing solution (I). The lithium solution (washing solution (I)) separated after water washing has a low concentration and, thus, needs to be concentrated to convert same into a high-concentration lithium solution required in the lithium compound materialization process. To this end, the washing solution (I) may be concentrated to 5,000 ppm or more through repeated use thereof (applying the first washing solution to n^{th} water washing such as 2^{nd}, 3^{rd}, and 4^{th} water washing). In addition, lithium ions not recovered in the repeated water washing may be concentrated or recovered by using additional water washing and membrane capacitive deionization (MCDI).

In addition, after step (b-1), (b-2) calcium oxide (CaO) or calcium hydroxide [Ca(OH)₂] may be added to the concentrated lithium solution to precipitate and remove carbonate ions, cations, or both. The ion exchange resin may be adsorbed to remove impurities that may be contained in the lithium solution recovered after water washing, and lime [CaO, Ca(OH)₂] may be added to remove carbonate ions and cations, followed by precipitation, filtration, and purification. In addition, heating, concentration, and crystallization processes may be additionally performed on the purified lithium solution to prepare lithium hydroxide powder.

In addition, after water washing the concentrated lithium solution in S10, a lithium-containing solution (I) may be added to perform the purification process of (b-2) (see FIG. 2).

(c) The residue remaining in S20 is sulfated to prepare lithium carbonate from the washing solution (II). S30

The step (c) of the present disclosure may be recovering the cathode material powder and insoluble lithium component from the waste cathode material reaction vessel and converting the insoluble lithium component contained in the waste reaction vessel into a water-soluble lithium component, followed by recovering. It is recovering a lithium sulfate solution through the sulfation reaction and water washing, followed by concentration/purification/conversion to prepare lithium carbonate.

The sulfation reaction may be adding sulfate and roasting the mixture at 400 to 900 °C. Referring to Tables 6 to 8, when water leached after salt roasting at 600 to 700 °C among the temperature ranges, the solution showed the highest lithium concentration.

The sulfate may be selected from the group consisting of Na₂SO₄, (NH₄)₂SO₄, MgSO₄ and Al₂(SO₄)₃. Referring to Tables 6 to 8, when water leached by using (NH₄)₂SO₄ among the sulfate salts, the solution showed the highest lithium concentration.

The diameter of the powder particles is preferably 800 µm or less. Referring to Table 9 and FIGS. 9A and 9B, when the size (diameter) of the powder was 800 µm or less, the solution salt roasted with (NH₄)₂SO₄ had a lithium concentration of 650 ppm or more, with the maximum value of 1025 ppm, and the solution salt roasted with Al₂(SO₄)₃ had a lithium concentration of 470 ppm or more, with the maximum value of 973 ppm.

Referring to Table 10, the washing solution (II) obtained through water washing after sulfate roasting may be repeatedly treated with membrane capacitive deionization (MCDI) to enrich the lithium concentration of 3,000 ppm.

In addition, the sulfation reaction may be adding sulfuric acid, followed by roasting at 200 to 300 °C and water washing to prepare a lithium concentrate with a lithium concentration of 2,500 ppm or more. Referring to Table 11, the waste reactor vessel powder subjected to sulfuric acid roasting at 300 °C for 30 minutes showed a lithium concentration of about 2,500 ppm or more after water leaching.

A lithium phosphate may be prepared from the lithium concentrate, and a high-concentration lithium solution may be prepared from the lithium phosphate. A lithium-containing solution (I) and a lithium-containing solution (II) of S10 or a concentrated washing solution (I) of S20 may be added to the lithium concentrate (see FIG. 2).

When preparing a high-concentration lithium solution from the lithium phosphate, the reaction temperature may be 20 °C to 80 °C at a Cl/Li molar ratio of 1 and a solid-liquid ratio (Li₃PO₄/H₂O) of 100. The reaction temperature is preferably 40 °C to 80 °C, most preferably 80 °C. When the reaction temperature is less than 40 °C, the reactivity is low, and, when the reaction temperature exceeds 80 °C, economic efficiency may be low.

Referring to FIG. 10A, when the reaction temperature is 20 °C, the high-concentration lithium solution prepared from lithium phosphate has low reactivity, and the reactivity (lithium concentration) increases as the reaction temperature increases. When the reaction temperature is 80 °C, the solution shows the highest reactivity. When the reaction temperature is increased to 80 °C or more, the reaction rate and reactivity may be slightly improved, but the energy consumption rate is high and the economic feasibility is lowered. Thus, it seems that the reaction at 80 °C at which the solution shows 99% conversion rate and reaction equilibrium reached within 2 hours is optimal.

Referring to Table 12, FIGS. 10B and 10C, when the solid-liquid ratio is low as 200, the solution shows the highest lithium concentration at the Cl/Li molar ratio of 1, and, when the solid-liquid ratio is high as 300 or 400, the solution shows the highest lithium concentration at the Cl/Li molar ratio of 0.95. Further, when the Cl/Li molar ratio is 1 or more, the amount of calcium ions remaining in the lithium solution increases. Thus, it seems that the Cl/Li molar ratio of 0.95 is optimal.

A by-product (Ca₃(PO₄)₂·xH₂O, 1≤x≤5) generated when a high-concentration lithium solution is prepared from the lithium phosphate may be reacted with sulfuric acid to recover a phosphoric acid, and the recovered phosphoric acid may be used for producing lithium phosphate (see FIG. 11 and Table 13).

Referring to FIG. 12 and Table 13, the phosphoric acid recovered by reacting sulfuric acid with a by-product (Ca₃(PO₄)₂·xH₂O, 1≤x≤5) generated in the process of preparing a high-concentration lithium solution from lithium phosphate was heated or concentrated to be converted into high-concentration phosphoric acid (92%) of raw material grade, which was recycled as a reactant for producing lithium phosphate.

Lithium carbonate may be produced after purifying the high-concentration lithium solution. As shown in Table 15, sodium hydroxide may be added to the high-concentration lithium solution to adjust the pH, thereby purifying impurities through precipitation, and, as shown in Table 15, sodium carbonate may be added to the purified high-concentration lithium solution to prepare lithium carbonate.

(d) The zeolite-containing material is recovered from the residue remaining in S30. S40

The step (d) of the present disclosure may be acid leaching the remaining residue, followed by alkali treatment. It is a process of recovering the valuable metals from the waste cathode material reaction vessel through the steps S10, S20 and S30 and then converting the residue into an adsorption material.

The acid leaching may be treating the residue with sulfuric acid or a mixture of sulfuric acid and hydrogen peroxide in order to separate the residual components (e.g., Li, Ni, Co and Mn) contained in the residue before converting the residue into an adsorption material after recovering the valuable metals. In addition, the treatment temperature may be 60 to 90 °C. There is the problem that, when the leaching temperature is less than 60 °C, the leaching rate decreases, and, when it exceeds 90 °C, economic efficiency is low. Referring to Table 16, when the residue was treated with a mixed solution of sulfuric acid and hydrogen peroxide during acid leaching, the leaching rate slightly increased, as compared to that treated with sulfuric acid, and the higher the leaching temperature, the higher the leaching rate. However, when the leaching temperature exceeds 90 °C, hydrogen peroxide was decomposed to decrease the leaching rate, or the energy consumption rate was high, resulting in low economic feasibility. When the leaching temperature was less than 60 °C, the leaching rate decreased. Thus, the appropriate leaching temperature was 60 to 90 °C, and the highest leaching rate was shown at 80 °C.

The alkali treatment may be treating the residue with 1 to 7 moles of sodium hydroxide. After the acid leaching, the residue may be treated with alkali to form a zeolite material on the surface of the residue. The zeolite-containing material prepared in this way may be used as an adsorption material for removing harmful substances in water. In Table 17, the residue after acid leaching was treated with different alkali concentrations. As shown in FIG. 13, the results showed that, as the concentration of NaOH increased, the residue reacted with the aluminosilicate (Al₂O₃-SiO₂) component contained in the waste reaction vessel such that the XRD peak of the zeolite material was observed, and, as the NaOH concentration increased, peak intensity increased. Referring to Table 18, it can be seen that the zeolite-containing material prepared by treatment with 4 to 7 moles of sodium hydroxide has an excellent ability to remove heavy metals.

### <Embodiment>

Hereafter, preferred embodiments are proposed to help understand the present disclosure, but the following embodiments just exemplify the present disclosure and the scope of the present disclosure is not limited to the following embodiments.

### <Embodiment 1>

The samples collected from domestic cathode material manufacturers (company A) as waste cathode material reaction vessels were used in the following preparation examples and examples (main component: Al₂O₃-SiO₂-MgO, for manufacturing NCM-based cathode materials, discarded after 30 days). The cathode material powder attached to the inside of the waste cathode material reaction vessel was separated by tapping and water washed.

Table 1 and FIG. 3 show the concentration of lithium ions recovered depending on a change in the solid-liquid ratio in the washing process.

**[Table 1]**

| Conditions for water washing (The weight of cathode material: g / The volume of H₂O: mL) | Conditions for reaction (°C/hr) | Li⁺ conc. in sol. (ppm) | Al³⁺ conc. in sol. (ppm) | Ni²⁺ conc. in sol. (ppm) | Co²⁺ conc. in sol. (ppm) | Mn²⁺ conc. in sol. (ppm) |
|---|---|---|---|---|---|---|
| 1 g/10 mL | Room temperature/ 12 h | 146 | N.D. | | | |
| 3 g/10 mL | Room temperature/ 12 h | 341 | | | | |
| 5 g/10 mL | Room temperature/ 12 h | 563 | | | | |
| 7 g/10 mL | Room temperature/ 12 h | 764 | | | | |
| 10 g/10 mL | Room temperature/ 12 h | 1118 | | | | |

Referring to Table 1 and FIG. 3, it was confirmed that the concentration of recovered lithium ions increased as the solid/liquid ratio increased.

### <Embodiment 2>

The washing solution prepared in Embodiment 1 was concentrated by a membrane capacitive deionization (MCDI). Table 2 and FIG. 4 show the concentration of lithium ions depending on a MCDI repeat count.

**[Table 2]**

| Conditions for MCDI | Number of repetitions | Li⁺ conc. in sol. (ppm) |
|---|---|---|
| | 1 | 1350 |
| | 2 | 1950 |
| Li conc. 1,000 ppm_8L | 3 | 2565 |
| Adsorption/desorption potential: 1.3 V | 4 | 3175 |
| | 5 | 3615 |
| Supply flow rate of Li solution: 2 L/min | 6 | 4040 |
| | 7 | 4315 |
| Time required for 1 repetition: 450 sec | 8 | 4605 |
| | 9 | 4785 |
| | 10 | 4935 |
| | 11 | 5060 |

According to Table 2 and FIG. 4, it was confirmed that the washing solution of the cathode material powder could be concentrated to 5,000 ppm or more by repeatedly performing the membrane capacitive deionization (MCDI).

### <Embodiment 3>

The residue remaining after separating the washing solution of Embodiment 1 was leached with sulfuric acid under the conditions shown in Table 3, and the pH was adjusted with sodium hydroxide to separate a lithium-containing solution and a precipitate. Table 3 and FIG. 5 show the concentrations of lithium ions, nickel ions, cobalt ions and manganese ions in the solution depending on pH conditions.

**[Table 3]**

| Conditions for acid leaching of cathode material | Conditions for pH titration (25% NaOH sol.) | Li⁺ conc. in sol. (ppm) | Ni²⁺ conc. in sol. (ppm) | Co²⁺ conc. in sol. (ppm) | Mn³⁺ conc. in sol. (ppm) |
|---|---|---|---|---|---|
| Cathode material 80 g + 2M H₂SO₄ 1L 80°C-8h, 300 RPM | Raw | 4950 | 21180 | 3970 | 4230 |
| | pH 3 (3.1) | 5060 | 20500 | 3950 | 4220 |
| | pH 5 (4.9) | 5100 | 20930 | 3970 | 4240 |
| | pH 7 (7.0) | 5040 | 18230 | 3520 | 2940 |
| | pH 9 (8.9) | 4970 | 161 | N.D. | N.D. |
| | pH 11 (11.0) | 5010 | N.D. | N.D. | N.D. |

Referring to Table 3 and FIG. 5, it was confirmed that at pH 9 or higher, the concentration of lithium ions in the solution was high, and the concentrations of nickel ions, cobalt ions, and manganese ions were very low or absent; therefore, the precipitation rate of the NCM precursor was very high at pH 9 or higher.

### <Embodiment 4>

The waste cathode material reaction vessel from which the cathode material powder was separated in Embodiment 1 was pulverized to prepare powder having a particle size of less than 1 mm, and the powder was water washed under the conditions shown in Table 4 to obtain a washing solution. Table 4 and FIG. 6 show the concentration of lithium ions recovered depending on a change in the solid-liquid ratio in the washing process.

**[Table 4]**

| Conditions for water washing (Powder g/H₂O mL) | Conditions for reaction (°C/hr) | Li⁺ conc. in sol. (ppm) |
|---|---|---|
| 1 g/10 mL | Room temperature/12 h | 920 |
| 2 g/10 mL | Room temperature/12 h | 1785 |
| 3 g/10 mL | Room temperature/12 h | 2615 |
| 4 g/10 mL | Room temperature/12 h | 3375 |
| 5 g/10 mL | Room temperature/12 h | 4080 |
| 6 g/10 mL | Room temperature/12 h | 4710 |
| 7 g/10 mL | Room temperature/ 12 h | 5440 |
| 8 g/10 mL | Room temperature/12 h | 6045 |
| 10 g/10 mL | Room temperature/ 12 h | 7185 |

According to Table 4 and FIG. 6, it was confirmed that the concentration of lithium ions in the solution increased as the solid/liquid ratio increased.

### <Embodiment 5>

The waste cathode material reactor vessel powder pulverized in Embodiment 4 was repeatedly water washed under the conditions of Table 5 and concentrated. Table 5 and FIG. 7 show the concentration of lithium ions according to repeated water washing.

**[Table 5]**

| Conditions for water washing (Powder g/H₂O mL) | Solid-liquid ratio [Crucible (g)/H₂O (L)] | Number of repetitions of water leaching | Conditions for reaction (°C/hr) | Li⁺ conc. in sol. (ppm) | Al³⁺ conc. in sol. (ppm) |
|---|---|---|---|---|---|
| 500 g/1000 mL | 500/1 | 1 | Room temperature/ 12 h | 4170 | 259 |
| 475 g/950 mL | 500/1 | 2 | Room temperature/ 12 h | 7810 | 378 |
| 380 g/760 mL | 500/1 | 3 | Room temperature/ 12 h | 11690 | - |
| 340 g/680 mL | 500/1 | 4 | Room temperature/ 12 h | 14730 | - |
| 300 g/600 mL | 500/1 | 5 | Room temperature/ 12 h | 16010 | - |

Referring to Table 5 and FIG. 7, the concentration of lithium ions in the solution increased as the number of repetitions of water washing increased. However, due to aluminum ions remaining in the washing solution during the repeated washing process, Li-Al LDH (i.e., an insoluble lithium compound) was formed as the concentration increased to a high concentration, and loss of lithium ions occurred during the concentration process through repeated washing.

### <Embodiment 6>

The washed and concentrated solution of Embodiment 5 (water leaching repeated 5 times, and the lithium ion concentration of 16,010 ppm) was recovered. This solution was concentrated and crystallized by two methods (A) and (B) below, whose results are shown in FIG. 8:
(A) Concentration under reduced pressure and crystallization at 80 °C for 4 hours without pretreatment;
(B) Mixing with Ca(OH)₂ and stirring (with a Ca/Li molar ratio of 2), and 12 hours later, concentration under reduced pressure and crystallization at 80°C for 4 hours.

Referring to FIG. 8, it can be seen that lithium hydroxide and lithium carbonate were formed by (A), and lithium hydroxide was formed by (B) for removing carbonate ions and cations by using lime (i.e., Ca(OH)₂).

### <Embodiment 7>

Sulfur oxides [(NH₄)₂SO₄, MgSO₄, Al₂(SO₄)₃] was added to the residue remaining after separating the washing solution of the pulverized waste cathode material reaction vessel powder in Embodiment 4 (hereinafter referred to as 'residue from the waste reaction vessel of Embodiment 7'), and the residue was roasted under the conditions of Tables 6 to 8. Table 6 shows the concentration of lithium ions recovered during salt roating at 400 to 500 °C, Table 7 shows that at 600 to 700 °C, and Table 8 shows that at 800 to 900 °C.

**[Table 6]**

| Reactant/ Conditions for roasting | Reaction rate (based on equivalent ratio x n) Equivalent ratio: SO₄/Li=2 | Solid-liquid ratio of water leaching (sample-g/H₂O-mL) | Conditions for water leaching | Li conc. (ppm) | Al conc. (ppm) | Mg conc. (ppm) | Ca conc. (ppm) | Ni conc. (ppm) | Co conc. (ppm) | Mn conc. (ppm) |
|---|---|---|---|---|---|---|---|---|---|---|
| (NH₄)₂SO₄/ 400°C-4h | 1 | 1/10 | Room temperature/ 24 hr/ 300 RPM | 427 | 860 | 702 | 62.7 | 79.5 | 16.9 | 23.9 |
| | 1.25 | 1/10 | | 419 | 1090 | 703 | 62.9 | 78 | 16 | 23.2 |
| | 1.5 | 1/10 | | 446 | 1497 | 768 | 69.5 | 92 | 19 | 26.7 |
| | 2 | 1/10 | | 432 | 1987 | 903 | 66.1 | 88.1 | 18.2 | 26 |
| MgSO₄/ 400°C-4h | 1 | 1/10 | Room temperature/ 24 hr/ 300 RPM | 215 | - | 950 | 43.8 | - | - | - |
| | 1.25 | 1/10 | | 214 | - | 1212 | 45.6 | - | - | - |
| | 1.5 | 1/10 | | 211 | - | 1595 | 46.1 | - | - | - |
| | 2 | 1/10 | | 243 | - | 2056 | 53.5 | - | - | - |
| Al₂(SO₄)₃/ 400°C-4h | 1 | 1/10 | Room temperature/ 24 hr/ 300 RPM | 327 | - | 533 | 62 | 28.8 | - | 10.5 |
| | 1.25 | 1/10 | | 334 | 88.8 | 539 | 59.1 | 39.1 | 7.9 | 13.1 |
| | 1.5 | 1/10 | | 317 | 176.3 | 488 | 53.1 | 37.1 | 7.5 | 12.3 |
| | 2 | 1/10 | | 373 | 660 | 586 | 63.9 | 58.9 | 12.4 | 16.8 |
| (NH₄)₂SO₄/ 500°C-4h | 1 | 1/10 | Room temperature/ 24 hr/ 300 RPM | 424 | 652 | 677 | 76.7 | 86 | 166 | 23.8 |
| | 1.25 | 1/10 | | 430 | 937 | 705 | 77.3 | 88.8 | 17.6 | 25.2 |
| | 1.5 | 1/10 | | 442 | 1351 | 823 | 79.2 | 98.3 | 18.6 | 27.4 |
| | 2 | 1/10 | | 419 | 1854 | 910 | 70.7 | 88.9 | 17.7 | 24.6 |
| MgSO₄/ 500°C-4h | 1 | 1/10 | Room temperature/ 24 hr/ 300 RPM | 252 | - | 796 | 52.8 | - | - | - |
| | 1.25 | 1/10 | | 254 | - | 1228 | 47.9 | - | - | - |
| | 1.5 | 1/10 | | 264 | - | 1565 | 53.9 | - | - | - |
| | 2 | 1/10 | | 234 | - | 2331 | 52.1 | - | - | - |
| Al₂(SO₄)₃/ 500°C-4h | 1 | 1/10 | Room temperature/ 24 hr/ 300 RPM | 370 | - | 564 | 63.8 | 38.6 | 0 | 13.7 |
| | 1.25 | 1/10 | | 417 | 76 | 642 | 70.9 | 72.1 | 13.1 | 20.6 |
| | 1.5 | 1/10 | | 394 | 152.6 | 569 | 65 | 64.3 | 11.6 | 18.1 |
| | 2 | 1/10 | | 388 | 566 | 543 | 60.9 | 72.9 | 13.9 | 21.5 |

**[Table 7]**

| Reactant/ Conditions for roasting | Reaction rate (based on equivalent ratio x n) Equivalent ratio: SO₄/Li=2 | Solid-liquid ratio of water leaching (sample-g/H₂O-mL) | Conditions for water leaching | Li conc. (ppm) | Al conc. (PPm) | Mg conc. (ppm) | Ca conc. (ppm) | Ni conc. (ppm) | Co conc. (ppm) | Mn conc. (ppm) |
|---|---|---|---|---|---|---|---|---|---|---|
| (NH₄)₂SO₄/ 600°C-4h | 1 | 1/10 | Room temperature/ 24 hr/ 300 RPM | 573 | - | 909 | 229 | 45.5 | 13.2 | 28.1 |
| | 1.25 | 1/10 | | 532 | - | 957 | 220 | 55.4 | 13.5 | 28.3 |
| | 1.5 | 1/10 | | 533 | 56.8 | 1054 | 227 | 87.6 | 19.7 | 32.8 |
| | 2 | 1/10 | | 508 | 865 | 1137 | 211 | 94.6 | 19.6 | 29.2 |
| MgSO₄/ 600°C-4h | 1 | 1/10 | Room temperature/ 24 hr/ 300 RPM | 331 | - | 1089 | 64.2 | - | - | - |
| | 1.25 | 1/10 | | 328 | - | 1387 | 65.9 | - | - | - |
| | 1.5 | 1/10 | | 337 | - | 1748 | 70.6 | - | - | - |
| | 2 | 1/10 | | 318 | - | 2405 | 81.6 | - | - | - |
| Al₂(SO₄)₃/ 600°C-4h | 1 | 1/10 | Room temperature/ 24 hr/ 300 RPM | 507 | - | 652 | 87.6 | 34.6 | - | 19.4 |
| | 1.25 | 1/10 | | 535 | 72 | 673 | 95.5 | 74.4 | 15.7 | 25.2 |
| | 1.5 | 1/10 | | 473 | 212 | 596 | 86.9 | 66.5 | 13.4 | 21.1 |
| | 2 | 1/10 | | 468 | 726 | 604 | 81.6 | 80.1 | 15.5 | 22.8 |
| (NH₄)₂SO₄/ 700°C-4h | 1 | 1/10 | Room temperature/ 24 hr/ 300 RPM | 485 | - | 667 | 202 | - | - | - |
| | 1.25 | 1/10 | | 485 | - | 715 | 203 | - | - | - |
| | 1.5 | 1/10 | | 549 | - | 997 | 186 | - | - | 93 |
| | 2 | 1/10 | | 534 | - | 1230 | 188 | - | - | 124 |
| MgSO₄/ 700°C-4h | 1 | 1/10 | Room temperature/ 24 hr/ 300 RPM | 369 | - | 706 | - | - | - | - |
| | 1.25 | 1/10 | | 379 | - | 1129 | - | - | - | - |
| | 1.5 | 1/10 | | 391 | - | 1587 | - | - | - | - |
| | 2 | 1/10 | | 369 | - | 2347 | - | - | - | - |
| Al₂(SO₄)₃/ 700°C-4h | 1 | 1/10 | Room temperature/ 24 hr/ 300 RPM | 439 | - | 486 | - | - | - | - |
| | 1.25 | 1/10 | | 479 | - | 602 | - | - | - | - |
| | 1.5 | 1/10 | | 488 | - | 638 | - | - | - | 105 |
| | 2 | 1/10 | | 494 | - | 691 | - | - | - | 193 |

**[Table 8]**

| Reactant/ Conditions for roasting | Reaction rate (based on equivalent ratio x n) Equivalent ratio: SO₄/Li=2 | Solid-liquid ratio of water leaching (sample-g/H₂O-mL) | Conditions for water leaching | Li conc. (ppm) | Al conc. (ppm) | Mg conc. (PPm) | Ca conc. (ppm) | Ni conc. (ppm) | Co conc. (ppm) | Mn conc. (ppm) |
|---|---|---|---|---|---|---|---|---|---|---|
| (NH₄)₂SO₄/ 800°C-4h | 1 | 1/10 | Room temperature/ 24 hr/ 300 RPM | 473 | - | 187 | 213 | - | - | - |
| | 1.25 | 1/10 | | 436 | - | 188 | 211 | - | - | - |
| | 1.5 | 1/10 | | 434 | - | 193 | 212 | - | - | - |
| | 2 | 1/10 | | 438 | - | 276 | 215 | - | - | - |
| MgSO₄/ 800°C-4h | 1 | 1/10 | Room temperature/ 24 hr/ 300 RPM | 384 | - | 486 | 148 | - | - | - |
| | 1.25 | 1/10 | | 431 | - | 901 | 163 | - | - | - |
| | 1.5 | 1/10 | | 439 | - | 1146 | 156 | - | - | - |
| | 2 | 1/10 | | 436 | - | 2401 | 146 | - | - | - |
| Al₂(SO₄)₃/ 800°C-4h | 1 | 1/10 | Room temperature/ 24 hr/ 300 RPM | 438 | - | 241 | 152 | - | - | - |
| | 1.25 | 1/10 | | 438 | - | 281 | 158 | - | - | - |
| | 1.5 | 1/10 | | 439 | - | 371 | 158 | - | - | - |
| | 2 | 1/10 | | 409 | - | 390 | 126 | - | - | - |
| (NH₄)₂SO₄/ 900°C-4h | 1 | 1/10 | Room temperature/ 24 hr/ 300 RPM | 162 | - | 214 | 170.9 | - | - | - |
| | 1.25 | 1/10 | | 137 | - | 194 | 179.4 | - | - | - |
| | 1.5 | 1/10 | | 131 | - | 218 | 173.6 | - | - | - |
| | 2 | 1/10 | | 181 | - | 387 | 214.8 | - | - | - |
| MgSO₄/ 900°C-4h | 1 | 1/10 | Room temperature/ 24 hr/ 300 RPM | 310 | - | 602 | 214.6 | - | - | - |
| | 1.25 | 1/10 | | 334 | - | 707 | 222.5 | - | - | - |
| | 1.5 | 1/10 | | 379 | - | 772 | 225.2 | - | - | - |
| | 2 | 1/10 | | 393 | - | 1704 | 219 | - | - | - |
| Al₂(SO₄)₃/ 900°C-4h | 1 | 1/10 | Room temperature/ 24 hr/ 300 RPM | 299 | - | 373 | 187.1 | - | - | - |
| | 1.25 | 1/10 | | 326 | - | 452 | 191.8 | - | - | - |
| | 1.5 | 1/10 | | 334 | - | 504 | 197.6 | - | - | - |
| | 2 | 1/10 | | 338 | - | 569 | 192.5 | - | - | - |

Referring to Tables 6 to 8, the residue from the waste reaction vessel of Embodiment 7 to which (NH₄)₂SO₄ was added showed the highest lithium concentration during sat roasting or water leaching, and showed the highest lithium concentration during water leaching after salt roasting at 600 to 700 °C.

### <Embodiment 8>

The concentration of lithium ions was measured after salt roasting or water leaching depending on a powder size of the residue from the waste reaction vessel of Embodiment 7, and the results are shown in Table 9 and FIGS. 9A and 9B.

**[Table 9]**

| Reactant/ Conditions for roasting | Reaction rate (based on equivalent ratio x n) Equivalent ratio: SO₄/Li=2 | Powder size (µm) | Solid-liquid ratio of water leaching (sample-g/H₂O-mL) | Conditions for water leaching | Li conc. (ppm) | Al conc. (ppm) | Mg conc. (ppm) | Ca conc. (ppm) | Ni conc. (ppm) | Co conc. (ppm) | Mn conc. (ppm) |
|---|---|---|---|---|---|---|---|---|---|---|---|
| (NH₄)₂SO₄/ 600°C-4h | 1 | >710 | 1/10 | Room temperature/ 24 hr/ 300 RPM | 658 | 320 | 437 | 92.6 | 33.5 | 39.6 | - |
| | 1 | 710-500 | 1/10 | | 726 | 339 | 515 | 130.6 | 20.1 | - | - |
| | 1 | 500-250 | 1/10 | | 979 | 12.4 | 682 | 156.6 | 77.2 | 111.8 | - |
| | 1 | 250-100 | 1/10 | | 985 | 203 | 812 | 175.4 | 40.5 | - | - |
| | 1 | 100-53 | 1/10 | | 1025 | 113.9 | 1001 | 220.8 | 119.2 | 27.6 | 36.7 |
| | 1 | <53 | 1/10 | | 1022 | - | 952 | 206.9 | 131.2 | 30.8 | 40.4 |
| Al₂(SO₄)₃/ 600°C-4h | 1.25 | >710 | 1/10 | | 473 | 593 | 229 | 54.5 | - | - | - |
| | 1.25 | 710-500 | 1/10 | | 583 | 534 | 259 | 76.1 | 19 | 13 | - |
| | 1.25 | 500-250 | 1/10 | | 795 | 432 | 420 | 104.4 | 15 | - | - |
| | 1.25 | 250-100 | 1/10 | | 866 | 274 | 622 | 167.1 | 31.7 | - | - |
| | 1.25 | 100-53 | 1/10 | | 920 | 73.5 | 743 | 156 | 86.3 | 17.8 | 29.6 |
| | 1.25 | <53 | 1/10 | | 973 | 166.6 | 771 | 162.5 | 98.4 | 20.3 | 34.2 |

Referring to Table 9 and FIGS. 9A and 9B, when the size (diameter) of the powder was 800 µm or less, the solution salt roasted with (NH₄)₂SO₄ had a lithium concentration of 650 ppm or more, with the maximum value of 1025 ppm, and the solution salt roasted with Al₂(SO₄)₃ had a lithium concentration of 470 ppm or more, with the maximum value of 973 ppm.

### <Embodiment 9>

As shown in Table 10, the lithium solution recovered by salt roasting or water leaching of the residue from the waste reaction vessel of Embodiment 8 was repeatedly treated with membrane capacitive deionization (MCDI) to enrich the lithium concentration to 3,000 ppm or more.

**[Table 10]**

| Conditions for MCDI | Number of repetitions | Li⁺ conc. in sol. (ppm) |
|---|---|---|
| Li₂SO₄ sol. (Li conc. 498 ppm_8L) | 1 | 821 |
| | 2 | 1899 |
| Adsorption/desorption potential: 1.3 V | 3 | 2542 |
| Supply flow rate of Li solution: 2 L/min | 4 | 3101 |
| Time required for 1 repetition: 450 sec | | |
| | 5 | 3355 |

### <Embodiment 10>

As shown in Table 11, lithium phosphate was prepared from the recovered lithium concentrate by sulfuric acid roasting and water leaching of the residue from the waste reaction vessel of Embodiment 7.

**[Table 11]**

| Conditions for preparing Li solution | Reactant | Reaction temperatu re-Reaction time | Stirrin g speed (RPM) | Li (ppm) | | Li convers ion rate (%) |
|---|---|---|---|---|---|---|
| Step 1: waste sagger + 3M H₂SO₄ 300°C-30 min | Li purification solution (100 mL) + H₃PO₄ (0.85 mL) + NaOH (2.97 mL) [Li/PO₄ molar ratio=3, Na/PO₄ molar ratio=3] | Room temperatu re-12h | 300 | Initial | 2580 | - |
| Step 2: Solid-liquid ratio of water leaching 5 g/10 mL | | | | Final | 358 | 86.124 |
| Step 3: Purification of Li solution (Ca(OH)₂) | | | | | | |

According to Table 11, when lithium phosphate was produced from lithium concentrate (2580 ppm) recovered by sulfuric acid roasting or water leaching, a high lithium conversion rate of more than 85% was shown.

### <Embodiment 11>

When the high-concentration lithium solution was prepared from the lithium phosphate prepared in Embodiment 10, the lithium concentration of the high-concentration lithium solution prepared depending on a reaction temperature at a Cl/Li molar ratio of 1 and a solid-liquid ratio (Li₃PO₄/H₂O) of 100 is shown in FIG.

In addition, a high-concentration lithium solution was prepared under the conditions of Table 12, and the solid-liquid ratio, Cl/Li molar ratio, lithium concentration, lithium conversion rate, and calcium concentration were shown in Table 12, and FIGS. 10B and 10C.

**[Table 12]**

| Conditions for preparing Li solution | Solid-liquid ratio (Li₃PO₄-g/ H₂O-L) | Reaction temperature/ Reaction time | Stirring speed (RPM) | Cl/Li molar ratio | Li (ppm) | Li conversion rate (%) | Ca (ppm) |
|---|---|---|---|---|---|---|---|
| Li₃PO₄ + CaCl₂·2H₂O | 200 | 80°C-8h | 300 | 0.80 | 22460 | 71.19 | 480 |
| | | | | 0.85 | 24010 | 76.77 | 507 |
| | | | | 0.90 | 25510 | 82.27 | 1027 |
| | | | | 0.95 | 27270 | 88.71 | 1592 |
| | | | | 1.00 | 29800 | 97.77 | 1910 |
| | | | | 1.05 | 29250 | 96.77 | 10280 |
| | | | | 1.10 | 28500 | 95.08 | 17450 |
| | | | | 1.15 | 27950 | 94.03 | 22480 |
| | 300 | 80°C-8h | 300 | 0.80 | 36180 | 81.14 | 1188 |
| | | | | 0.85 | 38730 | 87.58 | 1374 |
| | | | | 0.90 | 39650 | 90.39 | 1570 |
| | | | | 0.95 | 42000 | 96.53 | 2350 |
| | | | | 1.00 | 41610 | 96.41 | 6020 |
| | | | | 1.05 | 41020 | 95.80 | 13870 |
| | | | | 1.10 | 40020 | 94.21 | 19870 |
| | | | | 1.15 | 38910 | 92.31 | 30480 |
| | 400 | 80°C-8h | 300 | 0.80 | 44150 | 78.56 | 2530 |
| | | | | 0.85 | 46900 | 84.76 | 2935 |
| | | | | 0.90 | 48200 | 88.45 | 3235 |
| | | | | 0.95 | 50800 | 94.63 | 6105 |
| | | | | 1.00 | 50050 | 94.62 | 11935 |
| | | | | 1.05 | 48200 | 92.47 | 16470 |
| | | | | 1.10 | 46850 | 91.18 | 23200 |
| | | | | 1.15 | 45400 | 89.62 | 32030 |

Referring to FIG. 10A, the reaction rate and reactivity (lithium concentration) were the lowest when the reaction temperature was 20 °C, and the highest reaction rate and reactivity were exhibited at 80 °C as the reaction temperature increased. As the reaction temperature increased, the reaction rate and reactivity can be slightly improved. However, when the reaction temperature was 80 °C, the reaction equilibrium was reached within 2 hours, and the conversion rate (lithium phosphate to lithium chloride solution conversion) was 99%; and the operation of the process at 80 °C or higher has a restriction that economic feasibility is lowered. Therefore, it seems that the reaction temperature of 80 °C is optimal.

In addition, referring to Table 12 and FIGS. 10B and 10C, when the solid-liquid ratio was as low as 200, the highest lithium concentration was shown at the Cl/Li molar ratio of 1, and, when the solid-liquid ratio was as high as 300 or 400, the highest lithium concentration was shown at the Cl/Li molar ratio of 0.95. In addition, the amount of calcium ions remaining in the lithium solution increased at the Cl/Li molar ratio of greater than 1. Thus, it can be seen that the optimal Cl/Li molar ratio is 0.95.

### <Embodiment 12>

Ca₃(PO₄)₂·xH₂O generated as a by-product in the process of preparing a high-concentration lithium solution from lithium phosphate in Embodiment 11 was reacted with sulfuric acid under the conditions shown in Table 13 to recover phosphoric acid, which was concentrated by heating at 80°C for 10 hours to prepare high-concentration phosphoric acid (92%), which was reacted with the lithium solution recovered after sulfuric acid roasting and water leaching in Embodiment 10 from the residue from the waste reaction vessel to prepare lithium phosphate.

**[Table 13]**

| Recovery of phosphoric acid from by-products | Ca (ppm) | PO₄ (ppm) | SO₄ (ppm) | Production of lithium phosphate from recovered phosphoric acid and lithium solution | Reaction temperature-Reaction time | Stirring speed (RPM) | Reaction time | Li (ppm) | Li conversion rate (%) |
|---|---|---|---|---|---|---|---|---|---|
| 1. Ca₃(PO₄)₂· xH₂O (40 g)/2M H₂SO₄ (200 mL) | 842 | 96400 | 9007 | Li solution (50 mL) + H₃PO₄ (0.386 mL) + NaOH (0.967 mL) [Li/PO₄ molar ratio=3, Na/PO₄ molar ratio=3] | Room temperature-12 h | 300 | Initial | 2552 | - |
| 2. Heating (80°C, 10 h)/ Concentration | N.D. | 921050 | 28430 | | | | Final | 360 | 85.89 |

Referring to Table 13 and FIG. 12, when lithium phosphate was produced by reacting high-concentration phosphoric acid recovered from a by-product (Ca₃(PO₄)₂·xH₂O) with the lithium solution recovered after sulfuric acid roasting or water leaching of the residue from the waste reaction vessel in Embodiment 10, a recovery rate of 85% or more was shown.

### <Embodiment 13>

As shown in Table 14, a high-concentration lithium solution prepared from lithium phosphate was purified.

**[Table 14]**

| Conditions for preparing high-concentration lithium solution | | | | Conditions for purification | | | | |
|---|---|---|---|---|---|---|---|---|
| Solid-liquid ratio (Li₃PO₄-g/H₂O-L) | Reaction temperature/ Reaction time | Stirring speed (RPM) | Li/Cl molar ratio | Reaction temperature/ Reaction time | Reaction speed (RPM) | pH | Li (ppm) | Ca (ppm) |
| 200 | 80°C-8h | 300 | 1.00 | 20°C-12h | 300 | 4.98 | 30999 | 1910 |
| | | | | | | 9.09 | 30894 | 1825 |
| | | | | | | 9.96 | 30666 | 992 |
| | | | | | | 10.97 | 29758 | - |
| | | | | | | 12.03 | 29076 | - |

### <Embodiment 14>

As shown in Table 15, lithium carbonate was prepared from a high-concentration lithium solution. As a result, a lithium conversion rate of 93.9% was shown.

**[Table 15]**

| Li solution | Li (ppm) | Ca (ppm) | Volume of solution (mL) | Li/CO₃ molar ratio | Reaction temperature/ Reaction time | Stirring speed (RPM) | Filtrate Li concentration (ppm) | Li conversion rate |
|---|---|---|---|---|---|---|---|---|
| LiCl solution | 29076 | - | 200 | 2 | 60°C-8h | 300 | 1772 | 93.9 |
| 1. Li₃PO₄ + CaCl₂·H₂O (Li/Cl molar ratio of 1) solid-liquid ratio (200 g/L), reflux method | | | | | | | | |
| 2. Ca purification (using NaOH_pH 12) | | | | | | | | |

### <Embodiment 15>

The leached components in the residue remaining after the sulfuration reaction and the washing solution separation (hereinafter referred to as 'the residue from the waste reaction vessel of Embodiment 15') according to acid leaching as shown in Table 16, before preparing the zeolite-containing material, were confirmed.

**[Table 16]**

| Li-source | H₂SO₄ conc. (M) | Reaction temperature/ Reaction time (°C/hr) | Concentration (ppm) | | | | | | |
|---|---|---|---|---|---|---|---|---|---|
| | | | Li | Al | Mg | Ca | Ni | Co | Mn |
| Sagger (100 g) + H₂SO₄ (1 L) | 2 | 40/8 | 622.00 | 2333.00 | 1069.00 | 237.50 | 122.80 | 25.50 | 35.60 |
| | 2 | 60/8 | 652.00 | 3524.00 | 1656.00 | 271.20 | 156.90 | 33.60 | 46.20 |
| | 2 | 80/8 | 702.00 | 5331.00 | 2547.00 | 269.90 | 190.20 | 40.80 | 53.20 |
| | 2 | 90/8 | 592.00 | 4129.00 | 2017.00 | 258.00 | 61.50 | 12.50 | 17.80 |
| Sagger (100 g) + H₂SO₄ (0.9 L) + H₂O₂ (0.1 L) | 2 | 40/8 | 640.00 | 2379.00 | 1093.00 | 244.10 | 198.50 | 42.90 | 59.10 |
| | 2 | 60/8 | 681.00 | 3536.00 | 1659.00 | 270.60 | 200.50 | 43.20 | 61.30 |
| | 2 | 80/8 | 721.00 | 5389.00 | 2562.00 | 275.60 | 202.20 | 42.10 | 63.30 |
| | 2 | 90/8 | 580.00 | 3963.00 | 1916.00 | 253.50 | 57.50 | 8.00 | 12.50 |

As shown in Table 16, in the acid leaching reaction, the residue from the waste reaction vessel was treated with sulfuric acid or a mixture of sulfuric acid and hydrogen peroxide, and the sulfuric acid solution mixed with hydrogen peroxide showed a rather high leaching rate. The higher the leaching temperature, the higher the leaching rate. However, when the leaching temperature exceeds 80 °C, the hydrogen peroxide is decomposed to reduce the leaching rate, or the energy consumption rate is high, resulting in low economic feasibility. When the leaching temperature is below 40°C, the leaching rate decreases. Therefore, the appropriate leaching temperature is 60 to 80 °C, and the highest leaching rate was shown at 80 °C.

### <Embodiment 16>

As shown in Table 17, the residue remaining after the acid leaching (80°C, 8 hours) of Example 15 was treated with alkali to perform a zeolite-containing material conversion reaction, followed by XRD composition analysis, and the results are shown in FIG. 13.

**[Table 17]**

| Sample | Residue-g/NaOH volume-mL | Reaction temperature/ Reaction time | Stirring speed (ppm) |
|---|---|---|---|
| Raw (2M H₂SO₄ treated) | 20/300 | 100°C-12h | 300 |
| 1M NaOH | 20/300 | 100°C-12h | 300 |
| 2M NaOH | 20/300 | 100°C-12h | 300 |
| 3M NaOH | 20/300 | 100°C-12h | 300 |
| 4M NaOH | 20/300 | 100°C-12h | 300 |
| 5M NaOH | 20/300 | 100°C-12h | 300 |
| 6M NaOH | 20/300 | 100°C-12h | 300 |
| 7M NaOH | 20/300 | 100°C-12h | 300 |

Referring to FIG. 13, it was confirmed that, as the concentration of NaOH increased, it reacted with the aluminosilicate (AhO₃-SiO₂, indicated with light dotted lines) component contained in the waste reaction vessel such that the XRD peaks shown in the zeolite (A type, thick dotted line) containing material was observed; and, as the NaOH concentration increased, peak intensity increased.

### <Embodiment 17>

The heavy metal (Cu) removal ability of the zeolite-containing material prepared in Embodiment 16 was tested, and the results are shown in Table 18.

**[Table 18]**

| Sample | Initial Cu conc. (ppm) | Sample-g/ Cu solution-mL | Reaction temperature/ Reaction time | Stirring speed (ppm) | Cu (ppm) |
|---|---|---|---|---|---|
| 2M H₂SO₄ treated - A | 500 | 1/50 | Room temperature-1d | 300 | 269 |
| A + 1M NaOH (100°C-12h) | | 1/50 | Room temperature-1d | 300 | 173.2 |
| A + 2M NaOH (100°C-12h) | | 1/50 | Room temperature-1d | 300 | 11.7 |
| A + 3M NaOH (100°C-12h) | | 1/50 | Room temperature-1d | 300 | 14.6 |
| A + 4M NaOH (100°C-12h) | | 1/50 | Room temperature-1d | 300 | 12.1 |
| A + 5M NaOH (100°C-12h) | | 1/50 | Room temperature-1d | 300 | N.D. |
| A + 6M NaOH (100°C-12h) | | 1/50 | Room temperature-1d | 300 | N.D. |
| A + 7M NaOH (100°C-12h) | | 1/50 | Room temperature-1d | 300 | N.D. |

Referring to Table 18, the zeolite-containing material prepared by treatment with 5M or more of sodium hydroxide removed all copper contained in the aqueous solution and, thus, showed excellent heavy metal removal ability.

Embodiments about a method for recovery of valuable metals and a zeolite-containing material from the waste cathode material reaction vessel according to the present disclosure were described above, but it is apparent that various modifications may be achieved without departing from the scope of the present disclosure.

Therefore, the scope of the present disclosure should not be limited to the embodiment(s) and should be determined by not only the following claims, but equivalents of the claims.

That is, it should be understood that the embodiments described above are not limitative, but only examples in all respects, the scope of the present disclosure is expressed by claims described below, not the detailed description, and it should be construed that all of changes and modifications achieved from the meanings and scope of claims and equivalent concept are included in the scope of the present disclosure.

### [Industrial Applicability]

According to the method for recovery of valuable metals and a zeolite-containing material from the waste cathode material reaction vessel of the present disclosure, a nickel • cobalt • manganese (NCM) precursor, valuable metals such as lithium hydroxide and lithium carbonate and a zeolite-containing material can be recovered from the waste cathode material reaction vessel being discarded to recycle resources and reduce waste in the waste cathode material reaction vessel.

## Claims

1. A method for recovery of valuable metals and a zeolite-containing material from a waste cathode material reaction vessel, comprising:
(a) recovering a nickel • cobalt • manganese (NCM) precursor from the cathode material powder remaining in a waste cathode material reaction vessel;
(b) preparing lithium hydroxide from a washing solution (I) of the waste cathode material reaction vessel;
(c) sulfating the residue remaining after separating the washing solution (I) in step (b) to prepare lithium carbonate from a washing solution (II); and
(d) preparing a zeolite-containing material from the residue remaining after separating the washing solution (II) in step (c).

2. The method for recovery of valuable metals and a zeolite-containing material from a waste cathode material reaction vessel of claim 1, wherein the step (a) comprises
(a-1) water washing the cathode material powder to separate the lithium-containing solution (I), and
(a-2) acid leaching the residue remaining after the separation to separate the lithium-containing solution (II).

3. The method for recovery of valuable metals and a zeolite-containing material from a waste cathode material reaction vessel of claim 2, wherein the step (a-1) is repeatedly treating the lithium-containing solution (I) with membrane capacitive deionization (MCDI) to enrich the lithium concentration to 5,000 ppm or more.

4. The method for recovery of valuable metals and a zeolite-containing material from a waste cathode material reaction vessel of claim 2, wherein the step (a-2) is leaching the residue with an acid solution and then adjusting the pH to precipitate a nickel • cobalt • manganese (NCM) precursor.

5. The method for recovery of valuable metals and a zeolite-containing material from a waste cathode material reaction vessel of claim 4, wherein the pH is 9 or higher.

6. The method for recovery of valuable metals and a zeolite-containing material from a waste cathode material reaction vessel of claim 1, wherein the step (b) is (b-1) enriching the lithium concentration to 5,000 ppm or more by (i) water washing the washing solution (I) at a solid-liquid ratio of waste reaction vessel powder (g)/water (L) of 500 or more; or (ii) repeatedly water washing the washing solution (I).

7. The method for recovery of valuable metals and a zeolite-containing material from a waste cathode material reaction vessel of claim 6, wherein the step (b-1) is additionally water washing lithium ions not recovered in the step (b-1) and repeatedly treating same with membrane capacitive deionization (MCDI) to enrich the lithium concentration.

8. The method for recovery of valuable metals and a zeolite-containing material from a waste cathode material reaction vessel of claim 6, wherein the step (b-1) comprises (b-2) adding calcium oxide (CaO) or calcium hydroxide (Ca(OH)₂) to the concentrated lithium solution to precipitate and remove carbonate ions, cations, or both.

9. The method for recovery of valuable metals and a zeolite-containing material from a waste cathode material reaction vessel of claim 8, wherein the lithium-containing solution (I) of claim 2 is added to the concentrated lithium solution.

10. The method for recovery of valuable metals and a zeolite-containing material from a waste cathode material reaction vessel of claim 1, wherein the step (c) is converting the insoluble lithium component contained in the powder of the waste cathode material reaction vessel into a water-soluble lithium component through a sulfation reaction.

11. The method for recovery of valuable metals and a zeolite-containing material from a waste cathode material reaction vessel of claim 10, wherein the sulfation reaction is adding sulfate and roasting the mixture at 400 to 900 °C.

12. The method for recovery of valuable metals and a zeolite-containing material from a waste cathode material reaction vessel of claim 11, wherein the sulfate is selected from the group consisting of Na₂SO₄, (NH₄)₂SO₄, MgSO₄ and Al₂(SO₄)₃.

13. The method for recovery of valuable metals and a zeolite-containing material from a waste cathode material reaction vessel of claim 10, wherein the diameter of a powder particle is 800 µm or less.

14. The method for recovery of valuable metals and a zeolite-containing material from a waste cathode material reaction vessel of claim 11, wherein the washing solution (II) obtained through water washing after sulfate roasting is repeatedly treated with membrane capacitive deionization (MCDI) to enrich the lithium concentration of 3,000 ppm.

15. The method for recovery of valuable metals and a zeolite-containing material from a waste cathode material reaction vessel of claim 10, wherein the sulfation reaction is adding sulfuric acid, roasting the mixture at 200 to 300 °C, followed by water washing to prepare a lithium concentrate with a lithium concentration of 2,500 ppm or more.

16. The method for recovery of valuable metals and a zeolite-containing material from a waste cathode material reaction vessel of claim 14 or 15, wherein a lithium phosphate is prepared from the lithium concentrate, and a high-concentration lithium solution is prepared from the lithium phosphate.

17. The method for recovery of valuable metals and a zeolite-containing material from a waste cathode material reaction vessel of claim 16, wherein the lithium-containing solution (I) or lithium-containing solution (II) of claim 2 or the concentrated washing solution (I) of claim 6 is added to the lithium concentrate.

18. The method for recovery of valuable metals and a zeolite-containing material from a waste cathode material reaction vessel of claim 16, wherein by-products generated in the process of preparing the high-concentration lithium solution from the lithium phosphate is reacted with sulfuric acid to recover phosphoric acid, and the recovered phosphoric acid is used to prepare lithium phosphate.

19. The method for recovery of valuable metals and a zeolite-containing material from a waste cathode material reaction vessel of claim 16, wherein the high-concentration lithium solution is purified to prepare lithium carbonate.

20. The method for recovery of valuable metals and a zeolite-containing material from a waste cathode material reaction vessel of claim 1, wherein the step (d) is acid leaching the remaining residue, followed by alkali treatment.

21. The method for recovery of valuable metals and a zeolite-containing material from a waste cathode material reaction vessel of claim 20, wherein the acid leaching is treating the residue with sulfuric acid or a mixture of sulfuric acid and hydrogen peroxide.

22. The method for recovery of valuable metals and a zeolite-containing material from a waste cathode material reaction vessel of claim 21, wherein the temperature for the acid leaching is 60 to 90 °C.

23. The method for recovery of valuable metals and a zeolite-containing material from a waste cathode material reaction vessel of claim 20, wherein the alkali treatment is treating the residue with 1 to 7 moles of sodium hydroxide.
